# EUROPEAN PATENT APPLICATION

(11) **EP 1 720 079 A1**
(43) Date of publication of application: **08.11.2006**
(21) Application number: 05076058.6
(22) Date of filing: 06.05.2005
(51) Int. Cl.: G03H 1/02, B42D 15/00

(54) **Coloured composition comprising a hologram and preparation process**

(71) Applicant: NEOPACK, SL, 17834 Porqueres (Girona) (ES)
(72) Inventor: Dávila Casitas, Juan, 17834 Porqueres (Girona) (ES)
(74) Representative: Gislon, Gabriele

(57) **Abstract**

A process of producing a coloured hologram, comprising the steps of:
- preparing a lacquer composition comprising a UV/EB-hardening acrylic resin and at least one pigment, said resin providing instant hardening upon irradiation;
- applying said lacquer composition to selected areas (6) of a flexible support (S) by means of a rotary printing machine;
- shaping the applied lacquer to impart it a relief that forms a hologram (8); and
- irradiating said shaped areas with a UV light/EB radiation (10).

## Description

The present invention relates to a composition and a process for the preparation of coloured holograms.

In general, holograms of the type known as "relief' or "surface relief' holograms, have a laminated structure including a layer of embossed material, which is generally transparent and that provides the requested relief giving the holographic effect, and a very thin metal layer that is used to enhance the holographic effect of the transparent embossed layer. Further protective layers can be provided.

US-A-4758296 discloses a process of making relief holograms by applying a UV curable resin to a hologram master, applying a supporting transparent film to the resin and curing the resin on the supporting film. A final step is required in which the cured resin is covered with a substance to increase its reflectivity.

This document is silent about colouring the hologram apart from the use of a special "SPECTRAFOIL" product, whose nature is not disclosed, that has a coloured effect by diffraction.

Holograms have become more and more important in the packaging industry, where they are used not only for anti-counterfeiting but also for decorative purposes. In fact there is a search to replace the classic metallised silver-coloured hologram with a colour hologram, i.e. with an hologram with a colour different from silver. Examples of known techniques for producing colour holograms are U.S.Patent No. 4,421,380, that relates to colour holograms made in the form of a dot array, with a colour filter over each dot, and EP-A-0562839, that discloses a process of preparing a colour hologram that involves the use of a multi-layer material including two photosensitive layers sandwiched between isolation layers.

These and similar known techniques for preparing a coloured hologram are complex and expensive because they generally involve the use of several layers of different materials; another drawback of these techniques is that the obtained hologram has to be transferred to the final product.

Therefore, there is the need of a process of preparing a hologram that can provide cheap and coloured holograms in an easy way, that is suitable to mass production and that can be formed directly on the final support, e.g. a plastic film for packaging.

It is an aim of the present invention to overcome the above mentioned drawbacks and to solve the problem of providing unexpensive, coloured, mass produced holograms.

This aim is reached by means of the present invention, that provides for a process for the preparation of coloured holograms, comprising the following steps:
- preparing a lacquer composition comprising a radiation hardening acrylic resin and at least one transparent pigment, said resin being of the type giving substantially instant hardening upon irradiation;
- applying said lacquer composition to selected areas of a flexible support by means of a rotary printing machine;
- shaping the applied lacquer to impart it a relief that forms a hologram; and
- irradiating said shaped areas with a radiation selected from UV light and EB radiation to substantially instantly harden said shaped areas.

According to a preferred embodiment of the invention, the lacquer composition comprises a free radical generating agent and the shaped lacquer is cured with UV light.

According to another embodiment of the invention, the viscosity of the lacquer to be shaped is within the range of 0,2 to 7,0 poises.

A further object of the invention is a coloured hologram as obtainable by the above mentioned process.

Another object of the invention is the use of UV-curable or EB-curable acrylic resins for Over Print Varnish as a shapeable layer for the production of a relief hologram.

A still further object of the invention is the use of UV or EB hardening inks in a hologram production process and namely their use as pigments for UV or EB hardening resins in a hologram production process.

The resins or coatings suitable for use in this invention are known as "in-place-hardening" or "cure-in-place" resins. As the name implies, these resins and coatings are applied on a substrate and immediately cured when exposed to a radiation. The cure-in-place technology is known and has reduced the hardening (cure) time of the coating resin to milliseconds.

Suitable resins for use in the present invention are acrylic esters resins with low to zero Volatile Organic Compound comprising acrylates and/or methacrylates and very fast cure times. These resins can react to polymerise in a very short time after irradiation with UV light or Electron Beam radiation.

With the wording "substantially instant hardening" in claim 1 it is meant that the resin composition and the amount of free radical generator added to it are such as to cure (i.e. harden) the resin layer within milli- to nano-seconds after irradiation of the resins with a UV light or electron beam.

As is known in this field, the resin composition comprise monomers and oligomers. Suitable monomers have mono-, di- and tri-functionality; preferred monomers are low viscosity acrylates and methacrylates that function as reactive diluents, crosslinkers and performance property enhancers. Preferred monomers are alkoxylated monomers. Oligomers are selected from acrylated urethanes, epoxies, polyesters and acrylics; preferred oligomers are epoxy and polyester acrylate oligomers.

Further information on suitable cure-in-place resins can be gathered from the manufacturing industry and from technical magazines such as Paint & Coatings Industry, especially the issues from year 2000, included.

The viscosity of the resin composition is low enough to result in a final composition, i.e. even after addition of the pigment, that is low enough to be used on printing flexographic machines, and preferably within the range of 0,2 to 7,0 poises.

As mentioned, the resins according to the invention are instantly cured with UV or EB radiation. If UV (utraviolet) light radiation is used, a radical initiator that is activated by UV light is required in a sufficient amount to give instant hardening. Suitable initiators are e.g. benzophenone, benzil dimethylketal and 2-hydroxy-2methyl-1-phenyl-1-propanone. If the resin is cured by EB (electron beam), no radical initiator is required because sufficient energy should be produced from electron bombardment to generate the required amount of free radicals.

UV- or EB- instant-hardening resins particularly suitable for the invention are those resins that are based on acrylic and methacrylic esters such as those that are used in the printing field as a finishing coating to give a gloss (overprint varnish **-** OVP) to plastic and paper packaging materials.

These resins were found to be surprisingly suitable for providing a transparent hologram layer, without the need of a metallized or non-metallized enhancing layer. It probably is because of the peculiar "gloss" characteristic of the OVP resins that the same resins are particularly suitable for making a hologram, and it is especially surprising that excellent coloured holograms are obtained by adding a pigment to the resin composition that is used to form the relief hologram. In other words, the present invention makes it possible to pigment directly the hologram layer, i.e. the shaped resin, without jeopardizing the reflection properties of the hologram; at the same time the printing machines used to apply the coating resins to a paper or plastics support can be run at a very high speed.

Besides this dramatic advantage, many other advantages are provided by the present invention.

In fact, the acrylic resins of the invention are suitable for directly adhering to the paper and/or plastics substrate, i.e. there is no need of an adhesive layer and the relief hologram can be shaped directly on the substrate in a printing machine.

Thus, it is possible to produce a coloured hologram comprising only one layer of pigmented acrylic resin, directly applied to paper, plastics film or similar substrate.

The pigmented resins can be printed on the substrate with a printing machine such as a flexographic machine, at very high speed and production output. ) Moreover, the use of a flexographic printing machine makes it possible to apply the resin to selected areas of the substrate, only, and to shape the hologram in the same areas with the greatest accuracy because the rollers of the printing machine can be put in register.

Suitable free radicals generators that can initiate the curing and polymerise the resin are known in the art and are e.g. selected from benzophenone, benzil dimethyl ketal and 2-hydroxy-2methyl-1-phenyl-1-propanone. The amount of free radical initiator is sufficient to give an instantaneous curing of the resin and is obtainable from the resin manufacturer.

-The pigment is UV resistant and is preferably a transparent or semitransparent ) pigment. The pigment is incorporated in the resin in an amount within the range of 5 to 20% by weight, preferably within 12 to 17% by weight, so as to maintain acceptable values for the transparency and refractive index of the pigmented resin layer. The amount is also depending of the nature of the pigment and of its nature; the finer the pigment particles, the better is the transparency of the resin maintained. In general, the amount of pigment is such as to limit the loss in light transmission through the pigmented cured layer to 40% or less than the light transmission through a corresponding non-pigmented layer. A preferred size for the pigment particles is of less than 3 micron.

Exemplary suitable pigments are pigment blue 15:3, 15:0 and similar, Pigment Red 48:1, 48:3, 57:1, Pigment Yellow 14, 74, 83,150 Pigment Orange 34, Pigment Green 7 and others similar are used.

It was also found that a possible way of pigmenting the resin is by addition of 5 to 30% of an UV-curable printing ink of the type that would be used in a printing process on the same substrate on which the hologram has to be applied.

The invention will now be further disclosed with reference to the enclosed nonlimiting drawings, where:
- fig. 1 is a schematic and partial view of a printing machine suitable for carrying out the invention process;
- fig. 2 is a schematic and partial view of another suitable printing machine;
- fig. 3 is an enlarged view of the master roller during production of the hologram according to the invention; and
- fig. 4 is an enlarged view of a further embodiment of the invention during hologram production.

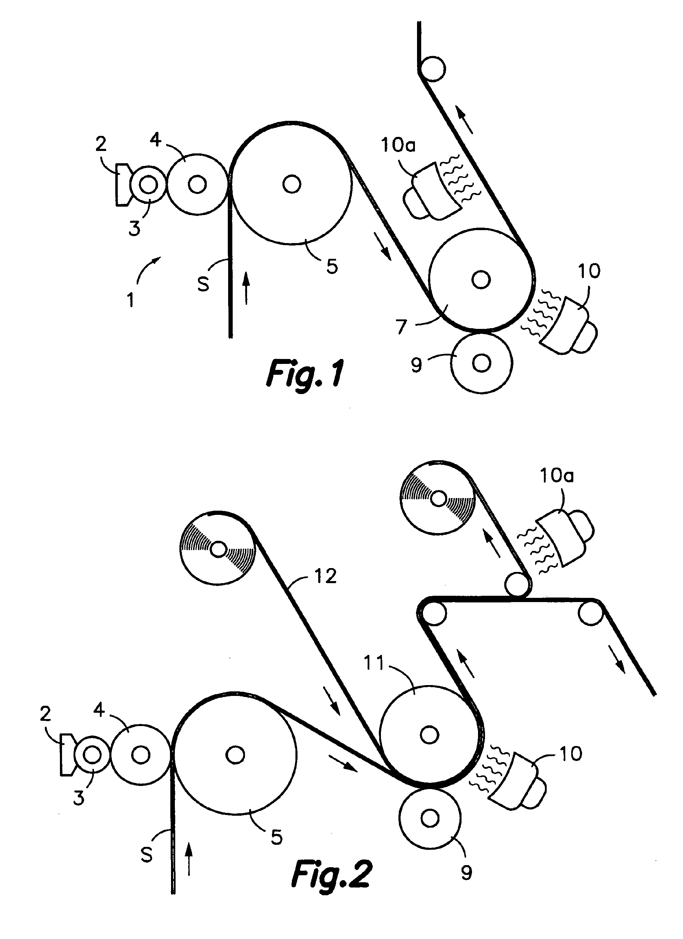

Fig. 1 is a schematic of one embodiment of a system of producing a relief hologram according to the above disclosed process.

The basic resin is commercially available. As previously mentioned, the pigment is added and dispersed in the base resin; the amount of pigment added is depending on the pigment nature and on its particle size.

More generally, the amount of pigment is within the range of 5% to 20% and preferably 13 to 17% by weight of the uncured resin, i.e. of the resin ready to be printed on the substrate.

If the resin is to be cured with UV light, a photoinitiator, i.e. a free radical generator, is also added.

The thus prepared resin is then fed to a resin container 2 of a printing group of a printing machine 1; the printing group includes an anilox roller 3 that draws resin from container 2 and transfers it to the cliché (or photopolymer) roller 4.

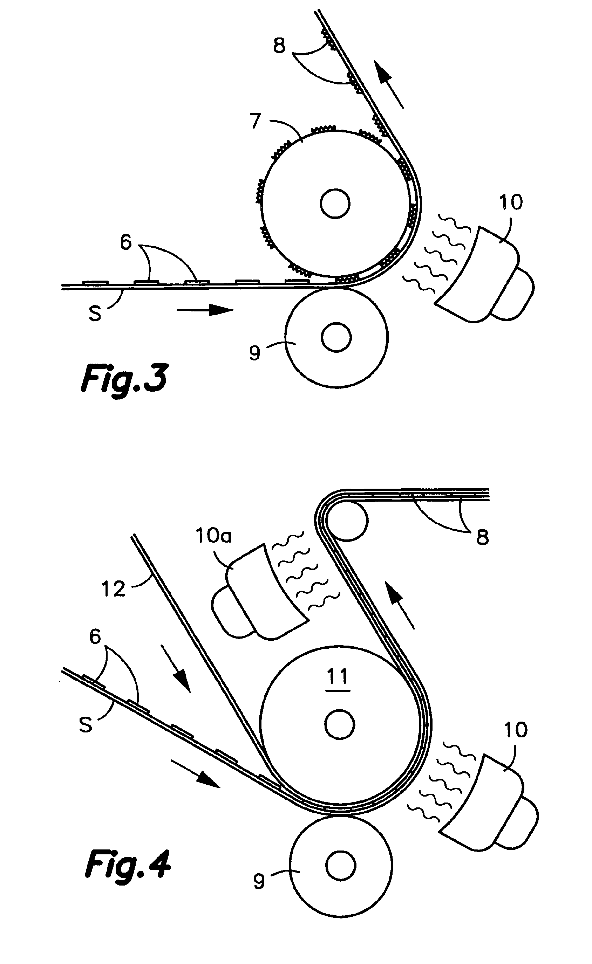

The cliché roller transfers the selected amounts of resin to selected areas of substrate S when the substrate is engaged by roller 4 and printing drum 5; the resulting substrate (see fig. 3) is provided with a plurality of smooth layers 6 of resin in selected areas of the substrate, i.e. the resin has been printed on the substrate.

Suitable substrates are paper, plastics films such as PE and PP films, and laminated films for packaging.

The printed substrate is fed to a master roller 7, that shapes the smooth layers 6 into relief holograms 8. To this purpose, substrate S is passed between master roller 7 and a counter-roller 9, usually made of rubber, that imparts a controlled and light pressure to substrate S in order to shape the layers 6 without flattening them.

The resin is cured by means of an UV lamp 10 positioned adjacent to master roller 7; if substrate S is paper or a similar non-transparent material, the UV lamp is located where the substrate leaves roller 7, on the side of the holograms 8, and is referred to as lamp 10a in fig. 2 and in fig. 4.

The substrate carrying the holograms can then be treated in the usual way: e.g., if the substrate is a film for packaging, it is then welded, cut and reduced to the required packages.

Fig. 2 shows a preferred embodiment of the invention, in which the master (shaping) roller 7 is replaced by a smooth drum 11 and the shaping of the smooth layers 6 is carried out by means of an embossed tape or web 12. The web 12 is obtained by embossing a thermoplastic tape with the required shape in a way know per se in the art, e.g. by heat shaping it with a master roller, and is generally embossed in its entire surface. The embossed surface is thus already in the form of a hologram and can be provided with a metallized layer or it can be an embossed aluminium foil on a substrate. These hologram-shaped webs are commercially available.

The embossed surface, e.g. in polyester, of tape 12 has a surface tension that is lower than the surface tension of the substrate on which the lacquer was applied, in order to avoid the lacquer adhering to the tape 12. When the embossed surface of the web contacts the smooth resin layers 6 (fig. 4) layers 6 are shaped into a relief hologram in a way similar to that according to fig. 3 embodiment. UV lamp 10b on the web side will provide the required curing of the shaped resin layers into holograms 8 if tape 12 is UV transparent.

If tape 12 is not transparent, after forming the holograms between roller 11 and rubber roller 9, substrate S and web 12 are kept into contact until they have passed the lamp 10a (not shown in fig. 4 but positioned as in fig. 2) and are eventually separated; web 12 is made back into a reel and substrate S is treated as previously discussed.

At least in the embodiment of fig. 1, the UV lamps can be replaced by an EB apparatus, this will result in the advantage that the resin composition usually does not require a free radical initiator.

In a preferred embodiment, the substrate on which the holograms are applied is a packaging material that has been printed in a flexographic machine and the hologram forming apparatus is mounted on said flexographic machine to have a continuous production of packaging material with holograms.

## Claims

1. A process of producing a coloured hologram, comprising the steps of:
- preparing a lacquer composition comprising a UV/EB-hardening acrylic resin and at least one pigment, said resin being of the type giving substantially instant hardening upon irradiation;
- applying said lacquer composition to selected areas of a flexible support by means of a rotary printing machine;
- shaping the applied lacquer to impart it a relief that forms a hologram; and
- irradiating said shaped areas with a UV light/EB radiation to substantially instantly harden said shaped areas.

2. A process according to claim 1, wherein said resin comprises epoxy or polyester acrylate oligomers and has viscosity within the range of 0.2 to 7 poises.

3. A process according to claim 1 or 2, wherein said pigment is selected from transparent and semi-transparent pigments and the amount of pigment is within the range of 5% to 20% by weight of the formula.

4. A process according to any previous claim, wherein said shaping step is carried out by means of a hologram embossed web.

5. A process according to any previous claim wherein the said layer of shaped resin is applied to the final substrate.

6. A coloured hologram as obtainable by a process according to any previous claim.

7. The use of UV- and/or EB-hardening acrylic resins for paper and plastic coating for the production of a relief hologram.

8. A packaging material provided with at least one coloured hologram as obtainable by a process according to any claim form 1 to 5.

9. The use of UV or EB hardening inks in a hologram production process.
